# EUROPEAN PATENT APPLICATION

(11) **EP 2 429 225 A1**
(43) Date of publication of application: **14.03.2012**
(21) Application number: 10772005.4
(22) Date of filing: 30.04.2010
(51) Int. Cl.: H04W 8/24, H04W 88/02

(54) **METHOD FOR PROVISIONING PARAMETERS OF TERMINAL, SYSTEM THEREOF, AND TERMINAL MANAGEMENT DEVICE**

(30) Priority: 06.05.2009 CN 200910137142
(71) Applicant: ZTE Corporation, Shenzhen, Guangdong 518057 (CN)
(72) Inventor: ZHOU, Tao, Shenzhen Guangdong 518057 (CN); JU, Fei, Shenzhen Guangdong 518057 (CN); YUAN, Lei, Shenzhen Guangdong 518057 (CN); LUO, Hong, Shenzhen Guangdong 518057 (CN); LI, Tao, Shenzhen Guangdong 518057 (CN)
(74) Representative: Garratt, Peter Douglas
(86) International application number: PCT/CN2010/072359
(87) International publication number: WO 2010/127602

(57) **Abstract**

A method and system for provisioning terminal parameters, and a terminal management apparatus are disclosed. The method includes: an open mobile alliance device management (OMA DM) server, receiving terminal information of a terminal and parameter information needing to be provisioned of the terminal sent by a trusted OMA Client Provisioning (CP) server, and sending the parameter information to an OMA DM client on the terminal according to the terminal information; and the OMA DM client sending the parameter information to an OMA CP client on the terminal, and the OMA CP client performing provisioning according to the parameter information. By way of the present invention, the problem in relevant art that the OMA CP is unable to transit to the OMA DM smoothly is solved, which avoids various kinds of failure caused by the operators switching among provisioning methods.

## Description

### Field of the Invention

The present invention relates to the communication field and, in particular to a method and system for provisioning terminal parameters and a terminal management apparatus.

### Background of the Invention

With the increasing enrichment and complexity of mobile data services, the services are dependent on terminals more and more. Mobile equipments acting as the carrier for subscribers to use mobile services have already become an important indispensible composition part of the mobile operating service system. To better enable the terminals to have rapid enhancement capability so as to deal with increasingly fierce market competition, and to remotely manage the terminal devices more conveniently, high efficiently, and rapidly, various operators and terminal manufacturers are all devoted to improving the ability of remotely managing the terminal devices.

The Open Mobile Alliance (abbreviated as OMA) organization was established formally in early June, 2002, and some organizations have joined the OMA subsequently. And these organizations mainly include: the Wireless Village, MGIF, SyncMLInitiative, MWIF, MMSIOP, and the LIF.

The main task of the OMA is to collect market requirements and formulate specifications, clearing the barriers of interoperability development and accelerating the development and application of various freshly new enhanced mobile information communications and entertainment services. There are lots of workgroups in the OMA, and the device management (abbreviated as DM) is one of them. The DM workgroup proposes some OMA standards for the DM, client provisioning (abbreviated as CP), firmware update management object (abbreviated as FUMO), software component management object (abbreviated as SCOMO), etc.

At present, to provision the parameters of a terminal (such as a mobile phone), two solutions of OMA CP and OMA DM are usually used. In particular, the OMA CP supports OTA provisioning or provisioning by means of subscriber identity modules (abbreviated as SIM) and smart cards, wherein the OTA mode is a relatively common mode.

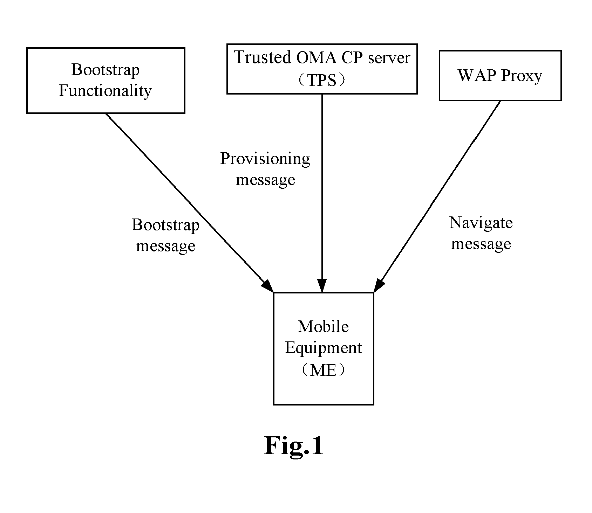

Fig. 1 is a schematic diagram of the provisioning process using the OTA mode. As shown in Fig. 1, a trusted OMA CP server (Trusted Provision Server, abbreviated as TPS) sends a provisioning message (which can also be referred to as provisioning information, parameter information, or parameter provisioning information) via an air interface, and an OMA CP client on a mobile equipment (abbreviated as ME) interacts with a subscriber after having received the provisioning message to carry out tasks such as acknowledge, authentication, etc. If the acknowledgement and the authentication are right, then the provisioning information will be stored on the mobile equipment to complete the provisioning. Moreover, the WAP proxy can send a Navigate message to the ME, and the Bootstrap functionality can send a Bootstrap message to the ME. The provisioning of the ME functionalities can be carried out by this Bootstrap message. For example, the ME can be initialized by the Navigate message, and the ME is informed of the network to be accessed by the ME.

The process of OMA CP provisioning the ME shown in Fig. 1 is asynchronous and unidirectional from the server to the client, and the server can only acknowledge that a provisioning command is sent but has no idea of the execution situation at the client.

In addition, as to the OMA DM, this provisioning method also provisions terminals by means of the OTA. During the provisioning of the OMA DM, initiating a DM session by the OMA DM server or the OMA DM client on the terminal is required. The OMA DM client and OMA DM server first intercommunicate basis information with each other to complete relevant tasks such as authentication and the like, and then the OMA DM server sends provisioning information to the nodes on an OMA DM management tree by means of a command. During the DM session, and after parsing the provisioning information, the OMA DM client stores the parsed provisioning information on the terminal and returns the result of command execution.

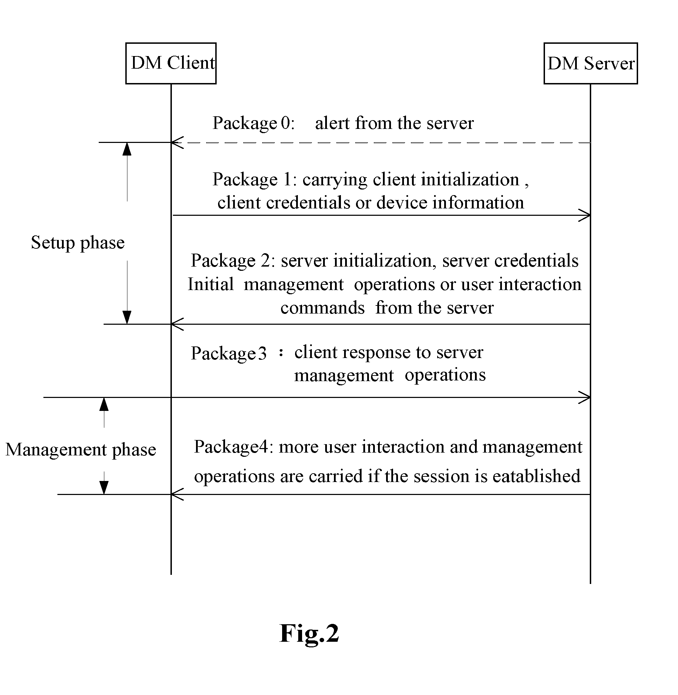

As shown in Fig. 2, the DM Server first sends a package 0 to the DM client, the package 0 carrying an alert from the server; then, the DM client sends a package 1 to the DM server, the package 1 carrying client initialization, client credentials, and device information; then, the DM server sends a package 2 to the DM client, the package 2 carrying server initialization, server credentials, initial management operations, and user interaction commands. In the above, the transmission process of the packages 0, 1, and 2 can be referred to as a setup stage. As shown in Fig. 2, after the setup process, it further comprises: the DM Client sends a package 3 to the DM server, the package 3 carrying a client response to the sever management operation; then, the DM server sends a package 4 to the DM server, and then this package carries more user interaction and management operations if the session is continued.

It can be seen that this OMA DM provisioning mode is the bidirectional interaction between the server and the client, wherein the server can learn the execution result of a command, and the server and the client can authenticate each other based on this interaction mode, which is easy to modify authentication information. Therefore, this OMA DM provisioning mode has better security

At present, many operators have deployed OMA CP servers to perform the parameter provisioning task. However, since the OMA DM has lots of advantages, more and more operators turn to the OMA DM. However, since the OMA CP and the OMA DM have relatively large difference no matter in their architectures or in command formats, the OMA CP cannot directly transit to the OMA DM. If the switch of these two modes is to be achieved directly, it would cause the terminal management to be complex, and the situation that the parameter provisioning of the terminal purchased by a user is unavailable to use is easy to occur, which affects user experience. And in addition, when a set of new OMA DM parameter provisioning is redesigned, the server and terminal need to be greatly modified and processed.

As to the problem in relevant art that the OMA CP is unable to transit to OMA DM smoothly, no effective solution has been proposed yet.

### Summary of the Invention

The present invention is proposed considering the problem in relevant art that the OMA CP is unable to transit to OMA DM smoothly. Therefore, the main objective of the present invention is to provide a method and a system for provisioning terminal parameters, and a terminal management apparatus.

A method for provisioning terminal parameters is provided according to one aspect of the present invention

The method for provisioning terminal parameters comprises: receiving, by an OMA DM server, terminal information of a terminal and parameter information needing to be provisioned of the terminal sent by a trusted OMA CP server, and sending the parameter information to an OMA DM client on the terminal according to the terminal information; and sending by the OMA DM client the parameter information to an OMA CP client on the terminal, and the OMA CP client performing provisioning according to the parameter information.

In this method, the process of the OMA DM server sending the parameter information to an OMA CP client on the terminal according to the terminal information comprises: the OMA DM server setting up a DM session with the terminal according to the terminal information, and sending the parameter information to the OMA DM client via the setup session.

In addition, after the OMA CP client performing the provisioning according to the parameter information, this method further comprises: sending, by the OMA CP client, the provisioning result to the OMA DM client; and sending, by the OMA DM client, the provisioning result to the OMA DM server.

The process of the OMA DM client sending the provisioning result to the OMA DM server comprises: the OMA DM client initiating a DM session with the OMA DM server and sending the provisioning result to the OMA DM server via the session.

Optionally, the process of the OMA DM server sending the parameter information to the OMA DM client on the terminal can include one of the following:
the OMA DM server sending the parameter information to the OMA DM client via a provisioning execution instruction, wherein the provisioning execution instruction is used for triggering the OMA CP client to perform the provisioning according to the parameter information; and
the OMA DM server sending the parameter information to the OMA DM client via a replacement command, and the OMA CP client is triggered to perform the provisioning according to the parameter information via the provisioning execution instruction.

A system for provisioning terminal parameters is provided according to another aspect of the present invention.

The system for provisioning terminal parameters comprises a trusted OMA CP server, an OMA DM server, and a terminal, wherein
the trusted OMA CP server is configured to send terminal information of the terminal and parameter information needing to be provisioned of the terminal; the OMA DM server is configured to receive the terminal parameter and the parameter information from the trusted OMA CP server and send the parameter information according to the terminal information; an OMA DM client provided on the terminal is configured to receive the parameter information from the OMA DM server and send the parameter information; and an OMA CP client provided on the terminal is configured to receive the parameter information from the OMA DM client and perform the provisioning according to the parameter information.

Moreover, the OMA CP client can be further configured to send the provisioning result to the OMA DM client.

The above OMA DM server can be configured to send the parameter information to the OMA DM client via a provisioning execution command, wherein the provisioning execution command is used for triggering the OMA CP client to perform the provisioning according to the parameter information.

On the other hand, the above OMA DM server can be further configured to send the parameter information to the OMA DM client via a replacement command, and the OMA CP client is triggered to perform the provisioning according to the parameter information via the provisioning execution command.

An terminal management apparatus provided on a terminal is provided according to a further aspect of the present invention.

The terminal management apparatus according to the present invention comprises: a first node for storing parameter information in the format of CP and triggering the sending of the parameter information; a second node for triggering an OMA DM client to process the sent parameter information; a third node for storing parameter information in the format of CP, triggering the sending of the parameter information, and triggering an OMA DM client to process the sent parameter information; and a fourth node for storing a CP provisioning state on the terminal and for providing the CP provisioning state to an OMA DM server.

By way of the above technical solution of the present invention, the problem in relevant art that the OMA CP is unable to transit to the OMA DM smoothly is solved by the way of an OMA DM server transmitting the data from a trusted OMA CP server TPS to an OMA DM client on terminal and the OMA DM client transmitting the data to an OMA CP client on the terminal to perform provisioning, which avoids various kinds of failure caused by operators switching among provisioning methods.

### Brief Description of the Accompanying Drawings

The drawings illustrated herein provide a further understanding of the present invention and form a part of the present application. The exemplary embodiments and the description thereof are used to explain the present invention without unduly limiting the scope of the present invention. In the drawings:
Fig. 1 is a schematic diagram of an OMA CP provisioning a ME in the relevant art;
Fig. 2 is a schematic diagram of an OMA DM provisioning a DM client in the relevant art;
Fig. 3 is a flowchart of a method for provisioning terminal parameters according to an embodiment of the present invention;
Fig. 4 is a block diagram of a system for provisioning terminal parameters according to an embodiment of the present invention;
Fig. 5 is a schematic diagram of the structure of a terminal management apparatus according to an apparatus embodiments of the present invention; and
Fig. 6 is a schematic diagram of a management tree logic which can implement the apparatus shown in Fig. 5.

### Detailed Description of Embodiments

### Functional Overview

Considering the problem in the relevant art that the OMA CP is unable to transit to the OMA DM smoothly, the present invention proposes that transmit data from a trusted OMA CP server TPS to an OMA DM client on a terminal by an OMA DM server, and transmit the data to an OMA CP client on the terminal by the OMA DM client, thus achieving the management of the OMA CP by the OMA DM, and achieving the smooth transition from the OMA CP to the OMA DM. The technical solution of the present invention will be described in detail hereinafter.

### Method embodiment

A method for provisioning terminal parameters is provided in the present embodiment.

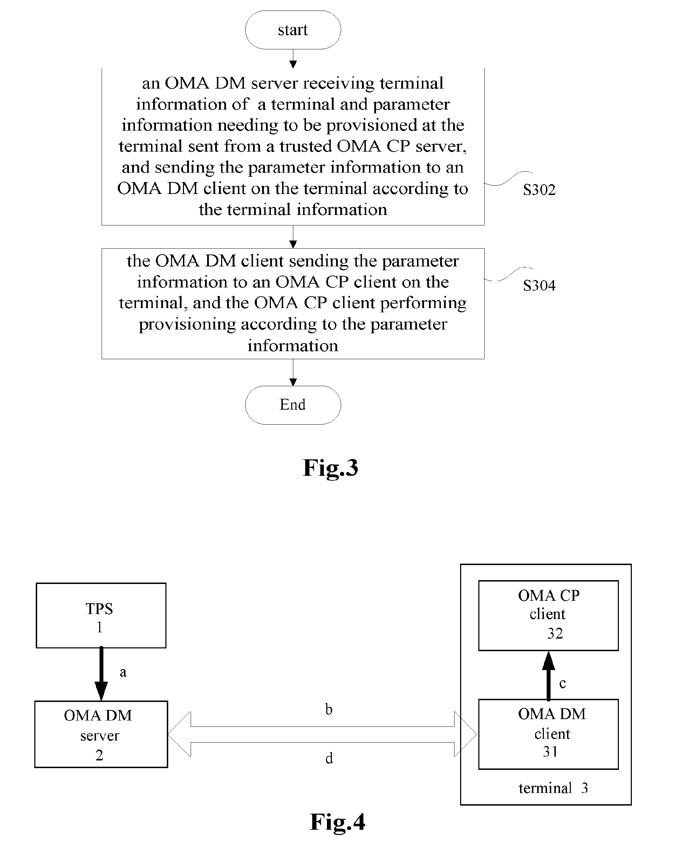

Fig. 3 is a flowchart of a method for provisioning terminal parameters according to an embodiment of the present invention, and it should be noted that the steps described in the following method can be performed in a computer system such as a set of computer executable instructions, and, although a logical order is shown in Fig. 3, the shown or described steps can be performed in an order different from the one presented herein in some circumstances.

As shown in Fig. 3, the method for provisioning terminal parameters according to the embodiment comprises the following process:
Step 5302: an OMA DM server receiving terminal information (which refers to the terminal information of a terminal to be provisioned) and parameter information needing to be provisioned at the terminal sent from a trusted OMA CP server, and sending the parameter information to an OMA DM client on the terminal according to the terminal information.
Step 5304: the OMA DM client sending the parameter information to an OMA CP client on the terminal, and the OMA CP client performing provisioning according to the parameter information.

In this method, the step of the OMA DM server sending the parameter information to an OMA DM client on the terminal according to the terminal information comprises: the OMA DM server establishing a DM session with the terminal according to the terminal information, and sending the parameter information to the OMA DM client through the established session.

After the OMA CP client performs the provisioning according to the parameter information, the OMA CP client can send the provisioning result to the OMA DM client, and then, the OMA DM client sends the provisioning result to the OMA DM server, thus meeting the requirement of result reporting by the OMA DM server.

When the OMA DM client sends the provisioning result to the OMA DM server, the OMA DM client initiates a DM session with the OMA DM server, and sends the provisioning result to the OMA DM server through the session.

The OMA DM server can send the parameter information to the OMA DM client through a provisioning execution command (which can be referred to as an execute command or Exec command), wherein the provisioning execution command is used for triggering the OMA CP client to perform provisioning according to the parameter information.

In addition, the OMA DM server can also send the parameter information to the OMA DM client through a replacement command (which can be referred to as a replace command), and the OMA CP client is triggered to perform provisioning by the provisioning execution command according to the parameter information carried in the replace command. That is, the sending of parameters and the triggering of provisioning in step S304 can be achieved by one or more commands.

That is, in order to achieve the transition from the OMA CP to the OMA DM, the OMA DM needs to conform to the requirements of the OMA CP. That is, the OMA DM server needs to support the mode of the TPS combining the parameter information into one command for sending. The OMA DM can send the command, which includes information of a plurality of parameters, from the TPS to the OMA DM client, and directly trigger the provisioning by the command which carries the parameter information; and simultaneously, the OMA DM server can also use its own mode, i.e. each parameter information is sent and triggered by a single command, and after the transition of the OMA CP to the OMA DM, the OMA DM server can consider to perform the parameters provisioning of the terminal by the mode of separating the sending and triggering totally using its own parameter information.

In addition, in this method, the OMA DM management tree on the terminal can be extended, which enables the terminal to perform the parameter provisioning according to the formats of the OMA DM.

By the above process, the current OMA CP parameter provisioning process can be taken into the management of the OMA DM, and the parameter provisioning of OMA CP being achieved by the OMA DM enables the OMA CP and the OMA DM to transit smoothly.

### System embodiment

A system for provisioning terminal parameters is provided in this embodiment.

As shown in Fig. 4, the system for provisioning terminal parameters according to this embodiment comprises a trusted OMA CP server 1, an OMA DM server 2, and a terminal 3, wherein the terminal 3 can further comprises an OMA DM client 31 and an OMA CP client 32, the function thereof are as follows:
the trusted OMA CP server 1 is configured to send terminal information of the terminal (which refers to the terminal to be provisioned) and parameter information needing to be provisioned of the terminal;
the OMA DM server 2 is configured to receive the terminal information and parameter information from the trusted OMA CP server 1 and to send the parameter information according to the terminal information;
the OMA DM client 31, which is provided on the terminal 3, is configured to receive the parameter information from the OMA DM server 2 and to send the parameter information; and
the OMA CP client 32, which is provided on the terminal 3, is configured to receive the parameter information from the OMA DM client 31 and to perform provisioning according to the parameter information.

For particular process of performing parameter provisioning of the terminal, please refer to Fig. 4 which is in particular as follows:
(a) the trusted OMA CP server TPS first sends relevant information about the mobile phone terminal needing to be provisioned and parameter information needing to be provisioned and the like to the OMA DM server. In the above, the mobile phone terminal provisioned by the OMA DM server needs to be integrated with the OMA DM client, and the smooth transition can be achieved by implementing the OMA CP client.
(b) the OMA DM server established a DM session with a corresponding mobile phone terminal according to the mobile phone terminal information transmitted by the TPS. During the session, the parameter information needing to be provisioned is sent from the OMA DM server to the OMA DM client.
(c) the OMA DM client invokes an interface of the OMA CP client to send the received parameter provisioning information to the OMA CP client to have it processed. After the process is completed, the OMA CP client feeds the provisioning result back to the OMA DM client.
(d) the OMA DM client reports the provisioning execution result to the OMA DM server and completes the provisioning process compatible with the OMA CP.

Preferably, the OMA DM server can send the parameter information to the OMA DM client through a provisioning execution command (which can be referred to as execute command or Exec command), wherein this provisioning execution command is used for triggering the OMA CP client to perform provisioning according to the parameter information. In addition, the OMA DM server can also send the parameter information to the OMA DM client through a replace command, and the OMA CP client is triggered to perform provisioning by the provisioning execution command according to the parameter information carried in the replace command. That is, the sending of parameters and the triggering of provisioning can be achieved by one or more commands.

That is, in order to achieve the transition from the OMA CP to the OMA DM, the OMA DM needs to conform to the requirements of OMA CP. That is, the OMA DM server needs to support the mode of the TPS combining the parameter information into one command for sending. The OMA DM can send the command, which includes a plurality of parameters information, from the TPS to the OMA DM client, and directly trigger the provisioning by the command which carries the parameter information; and at the same time, the OMA DM server can also use its own mode, i.e. each parameter information is sent and triggered by a single command, and after the transition from the OMA CP to the OMA DM, the OMA DM server can consider to perform the parameter provisioning of the terminal by the mode of separating the sending and triggering using its own parameter information.

### Apparatus Embodiment

A terminal management apparatus is provided in this embodiment, which can be provided in the terminal.

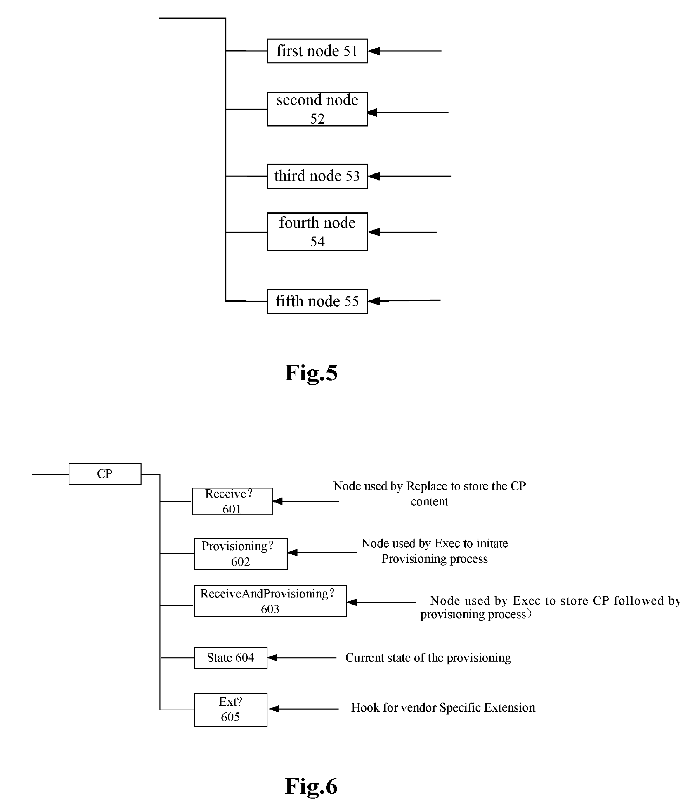

As shown in Fig. 5, the terminal management apparatus according to the present invention comprises: a first node 51, configured to store parameter information in the format of CP, and trigger the sending of the parameter information; a second node 52, configured to trigger an OMA DM client to handle the sent parameter information; a third node 53, configured to store parameter information in the format of CP, trigger the sending of the parameter information and trigger the OMA DM client to process the sent parameter information; a fourth node 54, configured to store a CP provisioning state on the terminal and provide the CP provisioning state to an OMA DM server; and a fifth node 55, configured to achieve the extension of this terminal management apparatus.

In the above, the first node 51 and the second node 52 are configured to achieve the sending and handling of the parameter information by individual steps. However, the third node 53 is configured to achieve the sending and handling of the provisioning information in one step.

Optionally, the above nodes of this apparatus can be implemented by the logic of the nodes on a DM management tree. For example, the parameter provisioning in the format of OMA CP can be managed by using the OMA DM management tree as shown in Fig. 6.

As shown in Fig. 6, the node CP is a root node of the OMA CP subtree, the function of which is to unify the URL of each node which achieves the smooth transition function, and it can be placed at any location on the whole management tree. The node Receive (corresponding to the first node) in Fig. 6, i.e. the node 601 is only configured to store the parameter provisioning information in the format of CP, and use the Replace command of OMA DM to perform the operation of sending and storing a CP provisioning message (CP content). The node Provisioning (corresponding to the second node) in Fig. 6, i.e. node 602, is configured to trigger the OMA CP client to handle the parameter provisioning information in the format of CP, and the Exec command (i.e. the above provisioning execution command) of the OMA DM is used for triggering the parameter provisioning process. The node ReceiveAndProvisioning (corresponding to the third node) in Fig. 6, i.e. node 603, is configured to send all of the parameter provisioning information at a time and trigger the parameter provisioning process, and the Exec command of OMA DM is used for processing (Node used by Exec to initate provisioning process). The node State (corresponding to the fourth node), i.e. node 604, is configured to store the provisioning state of a current CP, and the state which can exist is Unprovisioned State, TPS Access State, and Provisioned State, and the server can use the Get command of OMA DM to acquire the state, i.e. the current state of the provisioning. The node Ext (corresponding to the fifth node) in Fig. 6, i.e. node 605, is configured to perform specific function extension to the CP management subtree afterward.

Based on the above method, system and apparatus, the particular process of the OMA DM managing the OMA CP in the present invention is as follows:
Step (1), the trusted OMA CP server TPS sends the information of a mobile phone terminal to be provisioned and parameter provisioning information in the format of CP to the OMA DM server;
Step (2), after receiving the above information, the OMA DM server initiatively establishes a DM session with the mobile phone terminal to be provisioned;
Step (3), the DM session is established successfully, and after completing such operations as information exchange, authentication, user acknowledgment and the link, the OMA DM server sends a command which needs to be handled by the OMA DM client;
Step (4), the OMA DM server first sends a Replace command to the node Receive and sends the OMA CP parameter provisioning information to the OMA DM client;
Step (5), the OMA DM server then sends an Exec command to the node Provisioning. And during the execution, the OMA DM client invokes an interface of the OMA CP client and transfers the OMA CP parameter provisioning information, performing parameter provisioning; and
the above steps (4) and (5) achieve the process of the OMA DM client receiving OMA CP parameter provisioning information and triggering the provisioning by individual steps, however, steps (4) and (5) can also be integrated to be the following step 150.
Step (6), the OMA DM server sends an Exec command to the node ReceiveAndProvisioning, and the Data element in the command carries the OMA CP parameter provisioning information. After receiving the above information, the OMA DM client invokes an interface of the OMA CP client and transfers the OMA CP parameter provisioning information, and performs parameter provisioning;

After steps (4) and (5) or performed step (6) are executed, the following steps proceed:
Step (7), after completing the provisioning, the OMA CP client invokes the interface provided by the OMA DM client to set the value of the node State, and transfers the result of this provisioning to the OMA DM client through a return value or an event; and
Step (8), the OMA DM client initiates the DM session and reports the result of this provisioning to the OMA DM server, and after receiving the result, the OMA DM server sends a Get command to the node State to acquire the state of a current OMA CP client.

After the provisioning development of the OMA DM server is finished, the provisioning of OMA DM can be performed according to the following steps.

Step (9), the OMA DM server establishes a DM session with the mobile phone terminal.

Step (10), the OMA DM server sends an Add command which is to add a node, and adds a relevant node of parameter provisioning on the currently available management tree.

Step (11), the FUMO function of the OMA DM is used to upgrade the software on the mobile phone such that the newly added node can have a corresponding execution function.

Step (12), the OMA DM server sends a Replace command to the newly added node to perform parameter provisioning.

It can be seen that the above system and apparatus successfully achieve the smooth transition from the OMA CP to the OMA DM by the way of the OMA DM managing the OMA CP.

By way of the above technical solution of the present invention, the problem in relevant art that the OMA CP is unable to transit to the OMA DM smoothly is solved by an OMA DM server transmitting the data from a trusted OMA CP server TPS to an OMA DM client on a terminal and the OMA DM client transmitting the data to an OMA CP client on the terminal to have it provisioned, which avoids various kinds of failure caused by operators switching among provisioning methods; moreover, the implementation of the present invention only needs to make relatively little modification to the OMA DM server and the trusted OMA CP server, which not only uses the original investment of the OMA CP but also achieves the transition to the OMA DM, and subsequently, the parameter provisioning can be performed by modifying the mode of the OMA DM management tree totally switching to the OMA DM, and simultaneously , providing enough time for developing OMA DM provisioning, which can introduce OMA DM services rapidly and keep them compatible with the OMA CP, and achieve the gradual switching of the OMA DM and the OMA CP.

Apparently, those skilled in the art shall understand that the above-mentioned modules and steps of the present invention can be realized by using a general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for provisioning terminal parameters, **characterized by** comprising:
an open mobile alliance device management server (OMA DM server) receiving terminal information of a terminal and parameter information needing to be provisioned of the terminal sent by a trusted open mobile alliance client provisioning server (trusted OMA CP server), and sending the parameter information to an OMA DM client on the terminal according to the terminal information; and
the OMA DM client sending the parameter information to an OMA CP client on the terminal, and the OMA CP client performing provisioning according to the parameter information.

2. The method according to Claim 1, **characterized in that** the step of the OMA DM server sending the parameter information to the OMA DM client on the terminal according to the terminal information comprises:
the OMA DM server establishing a DM session with the terminal according to the terminal information, and sending the parameter information to the OMA DM client through the established session.

3. The method according to Claim 1, **characterized in that** after the OMA CP client performing the provisioning according to the parameter information, the method further comprising:
the OMA CP client sending the provisioning result to the OMA DM client; and
the OMA DM client sending the provisioning result to the OMA DM server.

4. The method according to Claim 3, **characterized in that** the OMA DM client sending the provisioning result to the OMA DM server comprises:
the OMA DM client initiating a DM session with the OMA DM server, and sending the provisioning result to the OMA DM server by the session.

5. The method according to any one of Claims 1 to 4, **characterized in that** the step of the OMA DM server sending the parameter information to the OMA DM client on the terminal comprises one of the following:
the OMA DM server sending the parameter information to the OMA DM client by a provisioning execution command, wherein the provisioning execution command is used for triggering the OMA CP client to perform the provisioning according to the parameter information; and
the OMA DM server sending the parameter information to the OMA DM client by a replace command and triggering the OMA CP client to perform the provisioning according to the parameter information by the provisioning execution command.

6. A system for provisioning terminal parameters, **characterized by** comprising a trusted open mobile alliance client provisioning server (OMA CP server), an open mobile alliance device management server (OMA DM server), and a terminal, wherein
the trusted OMA CP server is configured to send terminal information of the terminal and parameter information needing to be provisioned of the terminal;
the OMA DM server is configured to receive the terminal parameter and the parameter information from the trusted OMA CP server and send the parameter information according to the terminal information;
an OMA DM client, which is provided on the terminal, is configured to receive the parameter information from the OMA DM server and send the parameter information; and
an OMA CP client, which is provided on the terminal, is configured to receive the parameter information from the OMA DM client and perform provisioning according to the parameter information.

7. The system according to Claim 6, **characterized in that** the OMA CP client is further configured to send the provisioning result to the OMA DM client.

8. The system according to Claim 6 or 7, **characterized in that** the OMA DM server is configured to send the parameter information to the OMA DM client by a provisioning execution command, wherein the provisioning execution command is used for triggering the OMA CP client to perform the provisioning according to the parameter information.

9. The system according to Claim 6 or 7, **characterized in that** the OMA DM server is configured to send the parameter information to the OMA DM client by a replacement command and trigger the OMA CP client to perform the provisioning by the provisioning execution command according to the parameter information.

10. A terminal management apparatus, which is provided on a terminal, **characterized by** comprising:
a first node, configured to store parameter information in format of Client Provisioning (CP), and trigger sending of the parameter information;
a second node, configured to trigger an open mobile alliance device management (OMA DM) client to handle the sent parameter information;
a third node, configured to store parameter information in format of CP, trigger sending of the parameter information, and trigger an OMA DM client to handle the sent parameter information; and
a fourth node, configured to store a CP provisioning state on the terminal, and to provide the CP provisioning state to an OMA DM server.
